# EUROPEAN PATENT APPLICATION

(11) **EP 4 057 197 A1**
(43) Date of publication of application: **14.09.2022**
(21) Application number: 22154912.4
(22) Date of filing: 03.02.2022
(51) Int. Cl.: G06Q 10/08, G06Q 20/20

(54) **PRODUCT MANAGEMENT SERVER AND PRODUCT MANAGEMENT METHOD**

(30) Priority: 12.03.2021 JP 2021039788
(71) Applicant: Toshiba TEC Kabushiki Kaisha, Tokyo 141-8562 (JP)
(72) Inventor: Watanabe, Ayato, Shinagawa-ku, Tokyo 141-8562 (JP)
(74) Representative: Bandpay & Greuter

(57) **Abstract**

According to one embodiment, a product management server includes a storage unit and a processor. The processor is configured to receive an image of a product display area from an imaging unit, acquire product parameters from the storage unit for a product in the display area, and acquire an out-of-stock threshold value for indicating whether the display area should be restocked. The processor calculates a value corresponding to the total number of the product in the display area and determines the maximum number of the product that could be displayed in the display area. The processor compares the value corresponding to the number of product present in the product placement area to the out-of-stock threshold value. The processor causes a notification to be output or not based on the comparison of the value corresponding to the number of product present in the product placement area to the out-of-stock threshold value.

## Description

### FIELD

Embodiments described herein relate generally to a product management server, a product management system, and a product management method.

### BACKGROUND

In the related art, there are systems that track whether or not product display shelves need to be replenished based on tracking of point of sale (POS) data in stores such as convenience stores and supermarkets. However, such management systems do not perform management of display shelf restocking according to all potentially relevant circumstances of the store.

### DISCLOSURE OF INVENTION

To this end, there is provided a product management server for a product management system according to claim 1.

According to the present invention, the storage unit may store a size of the product to be displayed in the at least one of the product placement areas, and the processor may calculate the value corresponding to the number of the product present in the at least one of the product placement areas based on the stored size of the product to be displayed in the at least one of the product placement areas.

According to the present invention, the storage unit may store a number of stack levels for the product to be displayed in the at least one of the product placement areas, and the processor may calculate the value corresponding to the number of the product present in the at least one of the product placement areas additionally based on the stored number of stack levels for the product to be displayed.

According to the present invention, the storage unit may store a size of the product to be displayed in the at least one of the product placement areas, and the processor may determine the maximum number of the product for the product placement area based on the stored size of the product to be displayed in the at least one of the product placement areas.

According to the present invention, the storage unit may store a number of stack levels for the product to be displayed in the at least one of the product placement areas, and the processor may determine the value corresponding to the maximum number of the product for the product in the at least one of the product placement areas additionally based on the stored number of stack levels for the product to be displayed.

According to the present invention, the processor may determine the maximum number of the product for the at least one of the product placement areas by image analysis of the received image.

According to the present invention, the processor may calculate the value corresponding to the number of the product present in the at least one of the product placement areas by image analysis of the received image.

According to the present invention, the storage unit may store the out-of-stock threshold value, and the processor may acquire the out-of-stock threshold value from the storage unit.

According to the present invention, the storage unit may store a reference out-of-stock value for the product to be displayed in the at least one of the product placement areas, and the processor may acquire the out-of-stock threshold value by adjusting the reference out-of-stock value based on a time of day.

According to the present invention, the processor may acquire the out-of-stock threshold value by adjusting the reference out-of-stock value based on sales data for the product.

According to the present invention, the storage unit may store a plurality of out-of-stock values for the product to be displayed in the at least one of the product placement areas, and the processor may acquire the out-of-stock threshold value for the product to be displayed in the at least one of the product placement areas by selecting one of the plurality of out-of-stock values based on a time of day.

According to the present invention, the storage unit may store a plurality of out-of-stock values for a plurality of product types, and the processor may acquire the out-of-stock threshold value for the product to be displayed in the at least one of the product placement areas by selecting one of the plurality of out-of-stock values according to a product type of the product to be displayed in the at least one of the product placement areas.

There is also provided a product management system, comprising:
a product display shelf with one or a plurality of product placement areas;
an imaging unit configured to image the one or plurality of product placement areas; and
the above-mentioned product management server.

The product management system may further comprise a notification device configured to output the notification to a store operator, the notification indicating the at least one of the product placement areas needs restocking.

There is furthermore provided a product management method, comprising:
receiving an image of a product placement area captured by an imaging unit;
acquiring product parameters from a storage unit for a product to be displayed in the product placement area;
acquiring an out-of-stock threshold value for indicating whether or not the product placement area should be restocked with the product;
determining the maximum number of the product for the product placement area;
calculating a value corresponding to the number of the product present in the product placement area;
comparing the value corresponding to the number of product present in the product placement area to the out-of-stock threshold value; and
causing a notification to be output or not based on the comparison of the value corresponding to the number of product present in the product placement area to the out-of-stock threshold value.

In the product management method, acquiring the out-of-stock threshold value may be performed by adjusting a reference out-of-stock value based on a time of day.

In the product management method, acquiring the out-of-stock threshold value may be performed by adjusting a reference out-of-stock value based on sales data for the product.

### BRIEF DESCRIPTION OF THE DRAWINGS

FIG. 1 depicts an overall configuration example of product management system according to a first embodiment.
FIG. 2 is a block diagram illustrating aspects of a product management system.
FIG. 3 is a flowchart of a product management process according to a first embodiment.

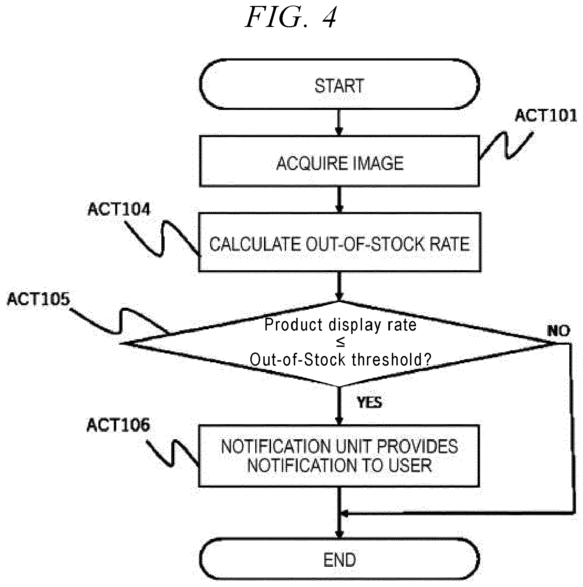

FIG. 4 is a flowchart of a product management process according to a second embodiment.
FIG. 5 is a bar graph illustrating aspects related to adjustments to an out-of-stock threshold by product type.
FIG. 6 is a flowchart of a product management process according to a third embodiment.
FIG. 7 is a bar graph illustrating aspects related to adjustments to an out-of-stock threshold by time of day.

### DETAILED DESCRIPTION

In general, according to one embodiment, it is provided a product management server that provides user notifications related to replenishing products on a display shelf in consideration of various factors other than just product level counts or the like.

According to one embodiment, a product management server includes a storage unit and a processor (corresponding to calculation unit and control unit). The processor is configured to receive an image of a product placement area captured by an imaging unit, acquire product parameters from the storage unit for a product to be displayed in the product placement area, and acquire an out-of-stock threshold value for indicating whether or not the product placement area should be restocked with the product. The processor is further configured to: determine the maximum number of the product for the product placement area, calculate a value corresponding to the number of the product present in the product placement area, and compare the value corresponding to the number of product present in the product placement area to the out-of-stock threshold value. The processor causes a notification to be output or not based on the comparison of the value corresponding to the number of product present in the product placement area to the out-of-stock threshold value.

Certain example embodiments of the present disclosure will be described with reference to the drawings. With these example embodiments, the number product items present on display shelves can be determined from images of the product display shelves and the determined number of product items can then be compared to an out-of-stock threshold value that is used to trigger a product shelf restocking notice or the like.

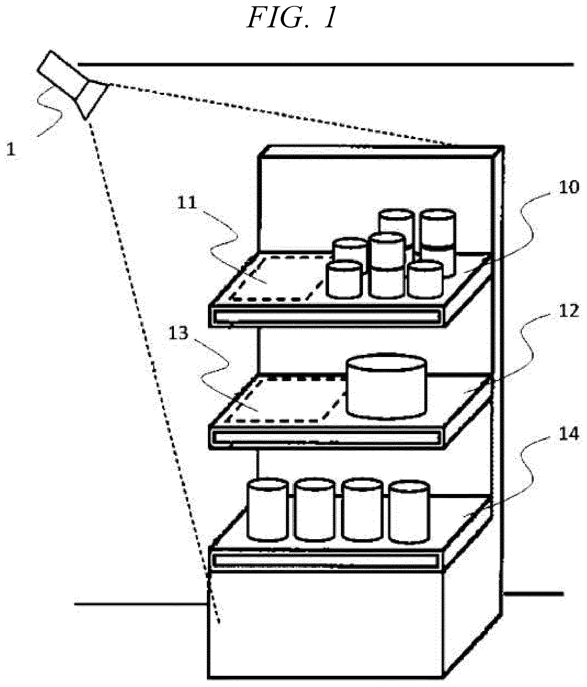

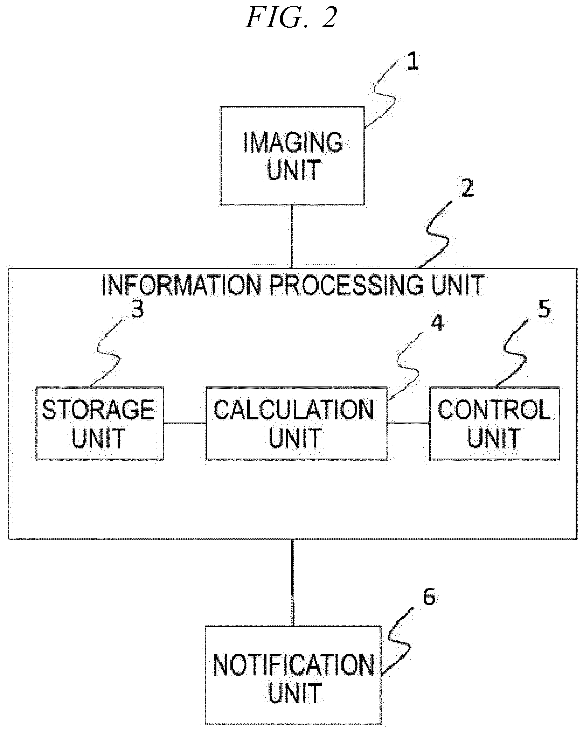

As depicted in FIG. 1, an imaging unit 1 acquires images of a display shelf (or other product display area) including a first product placement area 10, a second product placement area 12, and a third product placement area 14. That is, the imaging unit 1 includes a camera or the like that takes images (still pictures or video) of the display shelf. The images are transmitted to an information processing unit 2 (see FIG. 2). The information processing unit 2 either obtains or calculates (based on images) the intended maximum number of products to be displayed in a particular product placement area. The information processing unit 2 also calculates the present number of products in the particular product placement area to determine how far below the maximum the present number of products is for the particular placement area. The difference between the maximum number and the present number is the number of "out of stock" products for the placement area. In the present example, the above processing is performed for each of the product placement areas (first product placement area 10, the second product placement area 12, and the third product placement area 14) in turn based on various product parameters which can be associated in advance with the particular product placement area.

In the following description, the "out of stock" products (that is, the products that have been removed from the product placement area) are referred to as "out-of-stocks."

In the present example, the information processing unit 2 calculates an "out-of-stock rate" for each product placement area based on the maximum number of products to be displayed in the product placement and the determined/detected and either the determined number of out-of-stocks for the product placement area or the detected number of products still displayed in the placement area.

The information processing unit 2 then determines whether the calculated out-of-stock rate is below an out-of-stock threshold value that can be set in advance. If the out-of-stock rate is below the out-of-stock threshold value, the information processing unit 2 controls a notification unit 6 (corresponding to notification device) so as to provide a notification indicating the number of products presently on display in a product placement area (the "display rate") is too low.

In the present description, the "out-of-stock rate can be considered to be a ratio indicating how much of a product placement area is presently vacant as compared to when the maximum number of products is being displayed within the product placement area.

In the present description, the "display rate" can be considered to be a ratio of the number of products displayed in the product placement area to the intended maximum number for the product placement area.

In the present description, the "out-of-stock threshold" can be a reference value used for determined whether or not the displayed number of products should be considered too low (e.g., should trigger a restocking notice or the like).

### (First Embodiment)

FIG. 1 depicts aspects of a product management system of a first embodiment. The imaging unit 1 is, for example, a camera.

The imaging unit 1 acquires an image of each product placement area of a product shelf by imaging the product shelf. The imaging unit 1 transmits the acquired image to the information processing unit 2.

FIG. 2 is a block diagram of the product management system of the first embodiment. The product management system includes an imaging unit 1, an information processing unit 2, and a notification unit 6 (corresponding to notification device). The respective parts are connected via a bus or other communication means.

The imaging unit 1 acquires an image of a product placement area. The acquired image is transmitted to the information processing unit 2.

The information processing unit 2 receives the image from the imaging unit 1, calculates the maximum number of products to be displayed and an out-of-stock rate for the product placement area, then compares the out-of-stock rate to an out-of-stock threshold value, and controls the notification unit as needed.

The information processing unit 2 includes a storage unit 3, a calculation unit 4, and a control unit 5. The information processing unit 2 is, for example, a product management server. The storage unit 3 is composed of, for example, a read only memory (ROM), a random access memory (RAM), and a hard disk drive (HDD). The RAM and the HDD store the various product parameters related to items displayed in the product display areas along with an out-of-stock threshold value for each product display area. The storage unit 3 (more particularly the RAM and/or the HDD) can also store the images captured by the imaging unit 1. The product parameters are, for example, the nominal size (dimension) of the displayed product and, when the product type is stackable, the number of stackable layers for the product type. In the present example, calculation unit 4 calculates the maximum number of products to be displayed in a placement area and also the number of out-of-stocks for the placement area. Calculation in this context also includes estimation of these numbers based on image analysis and/or average product parameters or the like.

The calculation unit 4 calculates the out-of-stock rate and compares the presently displayed rate (1 - out-of-stock rate) with the out-of-stock threshold value.

The control unit 5 is, for example, a central processing unit (CPU). The control unit 5 performs overall control processing. In some examples, the calculation unit 4 may be realized as an internal function of the control unit 5. The control unit 5 controls the notification unit 6 so as to transmit a command for notification as appropriate based on the result of comparison by the calculation unit 4.

The notification unit 6 provides a notification to a user (e.g., a store clerk) to replenish the products in a product placement area. In general, the notification unit 6 provides a replenishment notification when the display rate for a product placement area is equal to or less than the corresponding out-of-stock threshold for the product placement area.

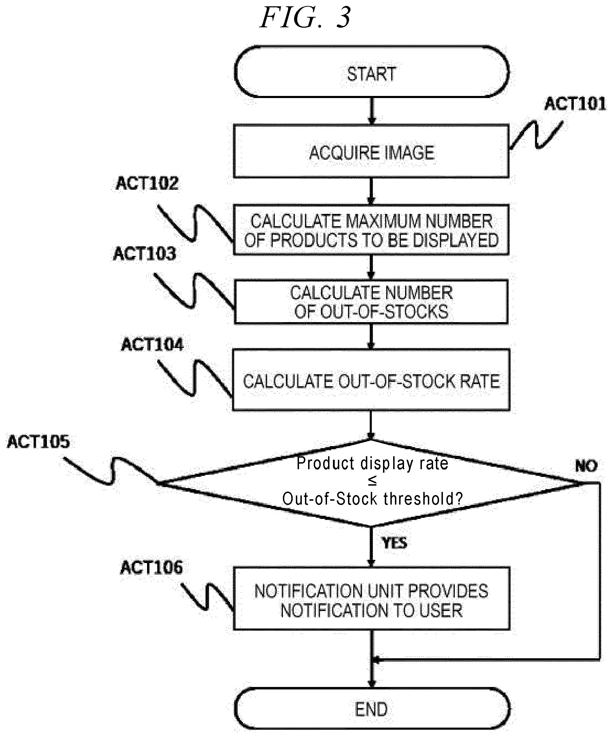

FIG. 3 is a flowchart illustrating a product management process by control unit 5 in the first embodiment. Before this process occurs, the system user enters the relevant parameters of each product being displayed and out-of-stock threshold values of each product or product placement area. Such parameters and values are stored in the storage unit 3.

The control unit 5 acquires an image of a product placement area (ACT 101)from the imaging unit 1 when transmitted to the information processing unit 2. The control unit 5 (or calculation unit 4) calculates the maximum number of products to be displayed in the product placement area(ACT 102). In this example, the maximum number of products to be displayed is calculated based on, for example, stored values for the available area and height of a product placement area in conjunction with stored product parameters providing product dimensions or the like. In some examples, the relevant dimensions for the product placement area and/or the product displayed in the product placement area may be obtained from image analysis of the image(s) from imaging unit 1. The control unit 5 (or calculation unit 4) calculates the number of out-of-stocks in a product placement area, based on the image sent to the information processing unit 2 (ACT 103). The control unit 5 (or the calculation unit 4) calculates the out-of-stock rate (ACT 104). The out-of-stock rate is calculated, for example, as the number of out-of-stocks divided by the maximum number of products to be displayed. The out-of-stock rate value is related to the product displayed rate as (1 - out-of-stock rate). The control unit 5 (or the calculation unit 4) compares the product displayed rate with the out-of-stock threshold to determine whether or not the product displayed rate is less than or equal to the out-of-stock threshold (ACT 105). If the product displayed rate is less than or equal to the out-of-stock threshold (YES in ACT105), the control unit 5 controls the notification unit 6 to provide a notification to the user. If the product displayed rate is not less than or equal to the out-of-stock threshold (NO in ACT105), the process ends. When the notification unit 6 receives a command for notification, the notification unit 6 notifies the user (ACT 106). In some examples, the notification unit 6 may be a unit or device external to the information processing unit 2.

An example of a method for calculating the maximum number of products to be displayed and the number of out-of-stocks will be described.

The first product placement area 10 (see FIG. 1) is used as an example.

The maximum number of products to be displayed in the first product placement area 10 is calculated from the area and height of the first product placement area 10 and the product parameters of the first product placement area 10. From the area and height of the first product placement area 10, the width, depth, and height of the space (volume) where the products could be placed are quantified. After this calculation of the size of first product placement area 10, the maximum number of products to be displayed can be calculated from the size of the products being displayed in the of first product placement area 10 and the potential (or permitted) number of stacked levels for the product.

In this example, the number of out-of-stocks in the first product placement area 10 is calculated from the area and height of a first out-of-stock area 11 (which is the region/portion of the first product placement area 10 in which no products are present) and the product parameters for products in the first product placement area 10. From the image of the first product placement area 10, the area with products and the area without products (first out-of-stock area 11) can be detected.

The comparison between product displayed rate (1 - out-of-stock rate) and the out-of-stock threshold will be described by using the first product placement area 10 and the second product placement area 12 as examples.

It is assumed in this example that the maximum number of products to be displayed in the first product placement area 10 is twenty (20) and the out-of-stock threshold value is 50%. Thus, if the number of products in first placement area 10 is twelve (12), the calculated out-of-stock rate would be 40%. That is, the product displayed rate is 60%, or in other words only 60% of maximum number (fully stocked number) products remains in the first product placement area 10. Therefore, since it this product display rate is not less than or equal to the out-of-stock threshold, the control unit 5 does not control or otherwise cause the notification unit 6 to notify the user.

If the maximum number of products to be displayed in the second product placement area 12 is two (2) and the corresponding out-of-stock threshold value is 50%, then when the number of products in the second product placement area 12 is just one (1), the calculated product display rate is 50%. Therefore, when the product displayed rate and the out-of-stock threshold are compared, the control unit 5 control or otherwise causes the notification unit 6 to output a notification since the product display rate is equal to the out-of-stock threshold value. Thus, it is possible to restock the products in each product placement area according to appropriate inventory values for each.

### (Second Embodiment)

In a second embodiment, the out-of-stock rate for products is calculated from just the detected areas of the out-of-stock area and the product placement area. In general, differences between the first embodiment and the second embodiment will be described.

The difference between the second embodiment and the first embodiment is that the out-of-stock rate is calculated from without use of pre-stored product size parameters or the like. That is, the out-of-stock rate is calculated in the second embodiment by determining the area of the out-of-stock area (no products present) by image analysis then dividing this detected out-of-stock area by the product placement area (which may be either a pre-stored value or the result of image analysis).

The second embodiment does not require use of a pre-stored parameter related to number product stacking levels, for example, for the calculation of the out-of-stock rate.

### (Third Embodiment)

In a third embodiment, the out-of-stock threshold of each product is adjusted or varied according to sales data or the like.

The third embodiment the control unit 5 adjusts the out-of-stock threshold for each product based on sales data stored in the storage unit 3. For example, the control unit 5 may adjust a particular product's out-of-stock threshold value upwards or downwards from a reference value based on historical sales rates or expected sales rates. That is, relatively slow selling product types may be allowed a lower threshold value than faster selling product types.

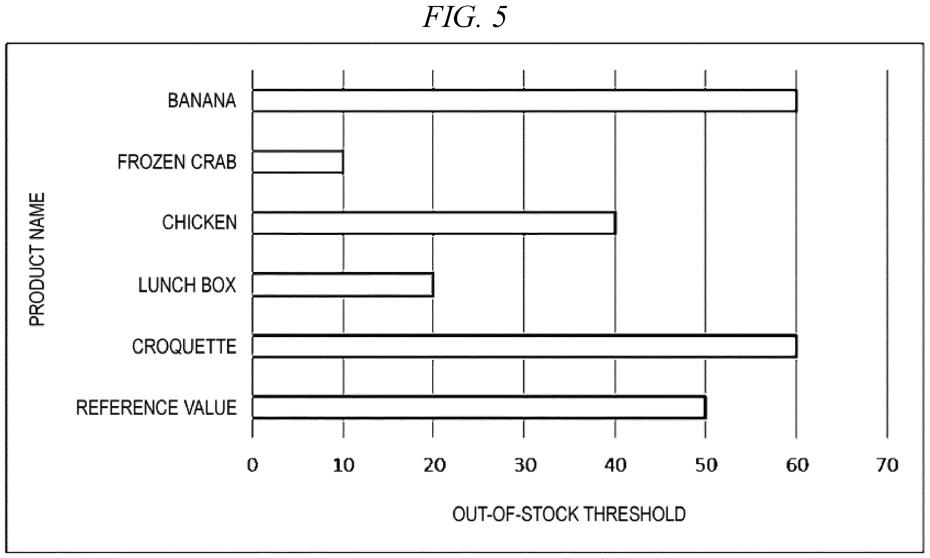

FIG. 5 is a bar graph illustrating adjustments in an out-of-stock threshold value for various product types according to the third embodiment.

In the third embodiment, the storage unit 3 of the information processing unit 2 also stores sales data (or values corresponding to such) for each product. The out-of-stock threshold value for each product can be a different value. In this example, the information processing unit revises the out-of-stock threshold value for each product upwards or downwards from a reference value according to the sales data.

For example, in a store that sells bananas, frozen crabs, chicken, lunch boxes, and croquettes, the store operator user sets the reference value to 50%. These products vary in popularity (e.g., number of sales per unit time) with, in this example, bananas and croquettes being the most popular (fast sellers), followed, in order of popularity, by chicken, lunch boxes, and frozen crabs. The control unit 5 adjusts the out-of-stock threshold value for each product type, based on the sales data (particularly reflecting sales popularity in the present example) stored in the storage unit 3. The adjustment may be based on recent sales to capture changing sales trends. The increment of the change, for example, 10%, as well as the adjustment triggering sales numbers may be set by the store operator for each product type.

Since the sales of bananas and croquettes are higher than the sales of other products, the control unit 5 determines that the purchase frequency is high and increases the out-of-stock threshold to 60% from the reference value. The control unit 5 lowers the out-of-stock threshold for the frozen crab since frozen crab is purchased relatively infrequently.

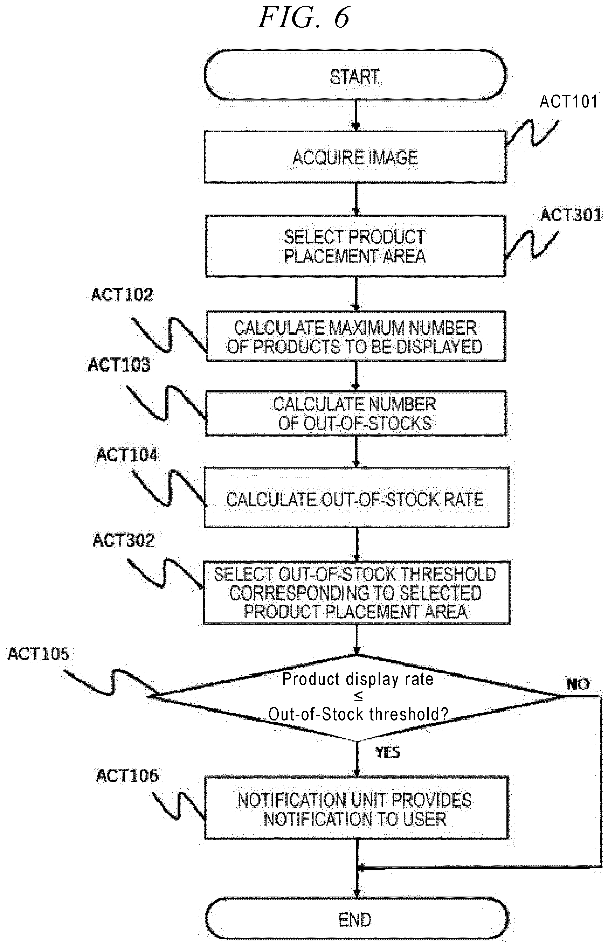

FIG. 6 is a flowchart of a product management process of the control unit 5 in the third embodiment. Differences between the third embodiment and the first embodiment will be primarily described. Aspects having the same reference numerals as those used in describing the first embodiment can considered to be the same or substantially similar to those of the first embodiment unless otherwise noted. The processing by the information processing unit 2 for determining whether to notify the store operator is described. The control unit 5 selects a product placement area from among the product placement areas 10, 12, and 14 (ACT 301). After calculating the out-of-stock rate of the product(s) in the selected product placement area in the same procedure as in the first embodiment described above (ACT 102 to ACT104), the control unit 5 selects and reads out the product out-of-stock threshold(s) of the product(s) in the selected product placement area from the storage unit 3 (ACT 302). The control unit 5 compares the product displayed rate (1 - out-of-stock rate) and the out-of-stock threshold, and determines accordingly whether to provide a notification to the user (ACT 105).

In the third embodiment described above, as in the first embodiment, products can be restocked in each product placement area as appropriate. In addition, since it is possible to provide a notification about an appropriate time for replenishing the products for each product, it is possible to more efficiently manage the display state of the product. Note, the present disclosure is not limited to the product examples shown in FIG. 5, and any combination and type of products may be used as long as the products can be placed in a product placement area.

### (Fourth Embodiment)

In a fourth embodiment, the out-of-stock threshold can be adjust according to the time range.

The fourth embodiment adjusts the out-of-stock threshold values to vary according to the time of day.

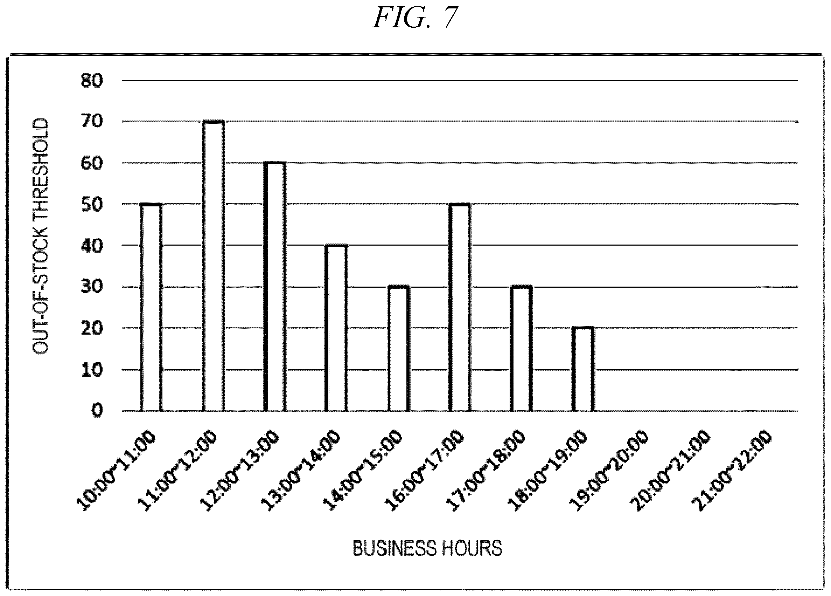

FIG. 7 is a bar graph illustrating an example of adjustments to the out-of-stock threshold value in the fourth embodiment. The storage unit 3 stores an out-of-stock threshold value for products in each of several different time bands corresponding to different times of the store operating day. The control unit 5 uses or adjusts the out-of-stock threshold according to the present time of day (current time). For example, between 11:00 and 12:00, the control unit 5 uses 70% as the out-of-stock threshold value. After 19:00 (7PM) it may be considered unnecessary to replenish the display shelves since business may be generally slower and an overnight restocking or the like will be conducted in any event prior to the next store opening time, thus the out-of-stock threshold is set to 0%.

Since the out-of-stock threshold value can be adjusted according to the time of day, more products can be displayed when customer traffic and sales volume is expected to be higher. Thus, it less likely a state will occur in which no products are being displayed during a high sales period. The fourth embodiment is not limited to the particular time bands and adjusted values shown in FIG. 7 and, in general, such values and parameters may be arbitrarily set by the store operator or the like.

Additionally, the present disclosure is not limited to the use of pre-stored or pre-established variations in out-of-stock threshold values, nor is specifically required that the system user or store operator input specific out-of-stock threshold values to be used. For example, thresholds may be adjusted for each product under specified conditions or dynamically based on sales data or other inputs. For example, the information processing unit 2 may calculate an appropriate out-of-stock threshold value for a product type or a store-wide reference value based on evaluations of recent sales, calendar days, observed or expected seasonal factors. Individual out-of-stock threshold values may be set or calculated for particular product placement areas based on location of the placement area within the store or a recognition of the product type being displayed in the placement area. For example, the information processing unit 2 may calculate/determine the product placement area size and the product parameters of the product within the product placement area based on evaluation/analysis of the images from the imaging unit 1. The control unit 5 can then store these values in the storage unit 3 and out-of-stock threshold values can be calculated based on such values and parameters provided by the information processing unit 2 itself rather than those input by the store operator (system user).

While certain of embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A product management server for a product management system wherein the product management system comprises a product display shelf with one or a plurality of product placement areas (10, 12, 14), an imaging unit configured to image the one or plurality of product placement areas, and the product management server, the product management server comprising:
a storage unit (3);
a processor configured to:
receive an image of at least one of the product placement areas (10, 12, 14) captured by the imaging unit,
acquire product parameters from the storage unit (3) for a product to be displayed in the at least one of the product placement areas,
acquire an out-of-stock threshold value for indicating whether or not the at least one of the product placement areas should be restocked with the product,
determine the maximum number of the product for the at least one of the product placement areas,
calculate a value corresponding to the number of the product present in the at least one of the product placement areas,
compare the value corresponding to the number of product present in the at least one of the product placement areas to the out-of-stock threshold value, and
cause a notification to be output or not based on the comparison of the value corresponding to the number of product present in the at least one of the product placement area to the out-of-stock threshold value.

2. The product management server according to claim 1, wherein
the storage unit (3) stores a size of the product to be displayed in the at least one of the product placement areas, and
the processor calculates the value corresponding to the number of the product present in the at least one of the product placement areas based on the stored size of the product to be displayed in the at least one of the product placement areas.

3. The product management server according to claim 1 or 2, wherein
the storage unit (3) stores a number of stack levels for the product to be displayed in the at least one of the product placement areas, and
the processor calculates the value corresponding to the number of the product present in the at least one of the product placement areas additionally based on the stored number of stack levels for the product to be displayed.

4. The product management server according to any one of claims 1 to 3, wherein
the storage unit stores a size of the product to be displayed in the at least one of the product placement areas, and
the processor determines the maximum number of the product for the product placement area based on the stored size of the product to be displayed in the at least one of the product placement areas.

5. The product management server according to any one of claims 1 to 4, wherein
the storage unit stores a number of stack levels for the product to be displayed in the at least one of the product placement areas, and
the processor determines the value corresponding to the maximum number of the product for the product in the at least one of the product placement areas additionally based on the stored number of stack levels for the product to be displayed.

6. The product management server according to any one of claims 1 to 5, wherein the processor determines the maximum number of the product for the at least one of the product placement areas and/or calculates the value corresponding to the number of the product present in the at least one of the product placement areas by image analysis of the received image.

7. The product management server according to any one of claims 1 to 6, wherein
the storage unit (3) stores the out-of-stock threshold value, and
the processor acquires the out-of-stock threshold value from the storage unit (3).

8. The product management server according to any one of claims 1 to 7, wherein
the storage unit (3) stores a reference out-of-stock value for the product to be displayed in the at least one of the product placement areas, and
the processor acquires the out-of-stock threshold value by adjusting the reference out-of-stock value based on a time of day.

9. The product management server according to any one of claims 1 to 8, wherein
the processor acquires the out-of-stock threshold value by adjusting the reference out-of-stock value based on sales data for the product.

10. The product management server according to any one of claims 1 to 9, wherein
the storage unit (3) stores a plurality of out-of-stock values for the product to be displayed in the at least one of the product placement areas, and
the processor acquires the out-of-stock threshold value for the product to be displayed in the at least one of the product placement areas by selecting one of the plurality of out-of-stock values based on a time of day.

11. The product management server according to any one of claims 1 to 10, wherein
the storage unit (3) stores a plurality of out-of-stock values for a plurality of product types, and
the processor acquires the out-of-stock threshold value for the product to be displayed in the at least one of the product placement areas by selecting one of the plurality of out-of-stock values according to a product type of the product to be displayed in the at least one of the product placement areas.

12. A product management system, comprising:
a product display shelf with one or a plurality of product placement areas (10, 12, 14);
an imaging unit configured to image the one or plurality of product placement areas; and
a product management server according to any one of claims 1 to 11.

13. The product management system according to claim 12, further comprising:
a notification device configured to output the notification to a store operator, the notification indicating the at least one of the product placement areas needs restocking.

14. A product management method, comprising:
receiving an image of a product placement area captured by an imaging unit;
acquiring product parameters from a storage unit for a product to be displayed in the product placement area;
acquiring an out-of-stock threshold value for indicating whether or not the product placement area should be restocked with the product;
determining the maximum number of the product for the product placement area;
calculating a value corresponding to the number of the product present in the product placement area;
comparing the value corresponding to the number of product present in the product placement area to the out-of-stock threshold value; and
causing a notification to be output or not based on the comparison of the value corresponding to the number of product present in the product placement area to the out-of-stock threshold value.

15. The product management method according to claim 14, wherein acquiring the out-of-stock threshold value is performed by adjusting a reference out-of-stock value based on a time of day and/or sales data for the product.
